# EUROPEAN PATENT APPLICATION

(11) **EP 0 952 583 A2**
(43) Date of publication of application: **27.10.1999**
(21) Application number: 99303023.8
(22) Date of filing: 20.04.1999
(51) Int. Cl.: G11B 33/04

(54) **Storage and display container**

(30) Priority: 21.04.1998 GB 9808474
(71) Applicant: Prism Leisure Corporation Plc, Enfield, Middlesex EN1 1SJ (GB)
(72) Inventor: Young, Geoff, Barnet, Hertfordshire EN8 0LS (GB)
(74) Representative: Cummings, Sean Patrick

(57) **Abstract**

A container for storing and/or displaying a plurality of flat information carriers comprises a base having a plurality of holders adapted to hold the information carriers in an orientation upstanding from the base; a rigid cover opposed to the base and to the holders and positioned to prevent release from the holders of information carriers situated between the cover and the base; means for relative movement between the cover and the base; and an aperture in the cover that can be aligned with a selected holder by said relative movement to permit insertion or removal of an information carrier into or from the container. The holders are preferably grooves in the base positioned to define a toric array of disc-shaped information carriers such as CDs or CD-ROMs.

## Description

The present invention relates to containers for storing and displaying flat information carriers, especially disc-shaped information carriers such as compact discs (CDs).

The CD has become the medium of choice in the music industry, rapidly replacing vinyl records, and the compact disc read only memory (CD-ROM) has become similarly common in the computer business. However, sometimes the amount of information needed to be stored is greater than the capacity of one disc (75-80 minutes playing time for audio discs and 600-650 Mbytes for CD-ROM), creating a need to package associated discs together. This in turn presents a need for a space-saving storage device; hence, preferred embodiments of the present invention are concerned with the storage and display of collections of discs aimed especially at the music industry.

Several criteria must be met when designing a storage container for many information carrying discs, especially CDs, due to the desirability of aesthetic appeal as well as functionality. Ideally, containers are designed to minimise external volume and maximise capacity and therefore it is preferable to store CDs without their individual containers, the so-called 'jewel boxes'.

Accessibility while allowing adequate protection is another important feature. A container is ideally designed to allow easy selection of the discs stored in the container, as well as access allowing easy retrieval and replacement of discs. Access should also be adequate, even when the container is stored in a confined or restricted space, for example, on a shelf. Ideally, the discs should be stored so that nothing touches the recorded area of the disc. Finally, manufacture of the article should be as economic and simple as possible.

Libraries of CDs are generally stored in their rigid jewel boxes which are housed in specially-designed racks. Storage racks in common use comprise two side walls held apart by a bottom section and a top section. The jewel boxes are supported by ledges profiled from the side walls, and may be retained by a lip at the front edge of the rack and a spring device at the rear of the rack to bias the box against the lip. The box may be removed by deflection over the lip against the bias of the spring.

One disadvantage of this type of storage is that the discs must be stored in their original boxes, which must therefore be opened and closed whenever one wishes to retrieve or to store a disc. Also, the only way to identify a specific disc is by referring to the narrow spine portion of the jewel box that is exposed when the box is stored in the storage rack. As CDs often incorporate elaborate graphics and designs on major faces of both the box and the disc, these indicia are not visible in a rack storage system as described here. Rack storage is generally not well suited to compilations of several discs due to their bulk when in jewel boxes as well as the poor display capacity of the jewel boxes themselves.

Other storage devices for discs have been described, including that disclosed in WO 96/23306. This device has a plurality of C-shaped cradles housed in a shaped container whereby a door is mounted on the housing and moves relative to the housing to open or close the container. When the door is in an open configuration, access to the cradles is allowed such that a selected cradle can be pivoted to enable removal of a disc from the cradle. This document, and others cited within, describe the use of individual, usually C-shaped, holders for each disc held within the container. Each disc is therefore located separately and requires its own support mechanism. Cradles can provide good support for discs but may impede removal of the disc. Another drawback is the fragility of small moving parts rendering sections of the apparatus impaired if broken or damaged, as well as increasing manufacturing time and costs.

US Patent No. 4753343 describes a container for storing audio discs that avoids the use of movable disc holders. The container described has a transparent flexible wall which is movable in grooves defined in oblong top and bottom panels of the container. Each disc is stored in two aligned slots, one slot being associated with each of the top and bottom panels. The wall has an aperture through which discs may be inserted or removed, the aperture being moved into alignment with the slots that hold or are intended to hold the disc in question.

The container of US Patent No. 4753343 has some advantages over other currently known storage devices but it suffers from disadvantages of its own. For example, the flexible wall requires rollers at the corners of the panels, adding to the complexity of the product. Also, given the flexibility of the wall, it would be difficult if not impossible to ensure smooth movement of the wall, especially as the container wears, ages and becomes dirty with use. Further, insertion of a disc is hampered by the need to align and engage the disc with two close-fitting slots.

It is also notable that the container of US Patent No. 4753343 mimics the rack-type display in that only the edge portions of the discs would be visible. This fails to exploit any indicia that may be present on a faces of the discs or their jewel boxes and necessitates the creation and maintenance of an indexing system in which the slots are numbered and the user is expected to draw up and keep an inventory list.

From one aspect, the present invention encompasses a container for storing and/or displaying a plurality of flat information carriers, the container comprising:
a base having a plurality of holders adapted to hold the information carriers in an orientation upstanding from the base;
a rigid cover opposed to the base and to the holders and positioned to prevent release from the holders of information carriers situated between the cover and the base;
means for relative movement between the cover and the base; and
an aperture in the cover that can be aligned with a selected holder by said relative movement to permit insertion or removal of an information carrier into or from the container.

Each holder is preferably adapted to receive an edge portion of an information carrier upon inserting the information carrier into the holder to a predetermined depth, and the cover is arranged such that at least a part of the cover opposed to the holder is spaced from the inserted information carrier by a spacing less than said depth. This ensures that information carriers such as a CD can easily be inserted into a holder yet cannot easily fall out of the holder once inserted. The cover co-operates with the holder to hold the CD in place.

The aperture may be a slot aligned with said orientation of the information carriers. Advantageously, the slot includes an enlarged portion permitting access by a user's fingers to grip an information carrier held within the device.

Each holder can be a groove in the base facing the cover, the groove lying in a plane. It is preferred that at least a portion of the groove is curved within that plane, in longitudinal section along the groove, and that the curvature of the groove defines end portions of the groove raised from the base relative to an intermediate portion of the groove. The raised end portions, which may include a raised central boss and a rim in preferred toroidal embodiments, serve further to locate an information carrier located in the groove.

For simplicity, the grooves are preferably oriented such that an information carrier is held in a groove under its own weight when the container is oriented for use. To this end, the grooves can face generally upwardly when the container is oriented for use.

In a compact arrangement in which any printed faces of the information carriers are visible, the holders are angularly spaced about a central portion of the base. Where the information carriers are discs, the holders are preferably disposed to hold the discs in a toric array with each disc being a cross-section of one side of the torus. The holders may therefore traverse an annular part-toroidal recess in the base.

From another aspect, therefore, the invention encompasses a container for storing and/or displaying a plurality of information carriers in the form of discs, the container comprising a base having a plurality of holders adapted to hold the information carriers in an orientation upstanding from the base, the holders being disposed to hold the discs in a toric array with each disc being a cross-section of one side of a torus.

In embodiments having angularly spaced holders, relative movement between the cover and the base may be achieved by connecting the cover and base for relative pivotal movement about the central portion of the base. To this end, the cover and the base can be connected by a pivot member at the central portion of the base. A bearing may be associated with the pivot member. Additionally, the cover and the base can be connected by an annular bearing. In a simple arrangement that promotes good location during pivotal movement, the annular bearing comprises a shoulder and a wall, the cover having a skirt that embraces the wall and runs on the shoulder.

To aid indexing, a plurality of indicia may be provided on the base, each holder being associated with a specific one of said indicia.

The invention extends to a container having a plurality of information carriers held by the holders.

In order that the invention may be more easily understood, reference will now be made, by way of example, to the accompanying drawings, in which:
Figure 1 is a perspective view of a preferred embodiment of the container;
Figure 2 is a plan view illustrating the base of the container;
Figure 3 is a sectional view along line III-III of Figure 2; and
Figure 4 is an enlarged detail sectional view corresponding to Figure 3.

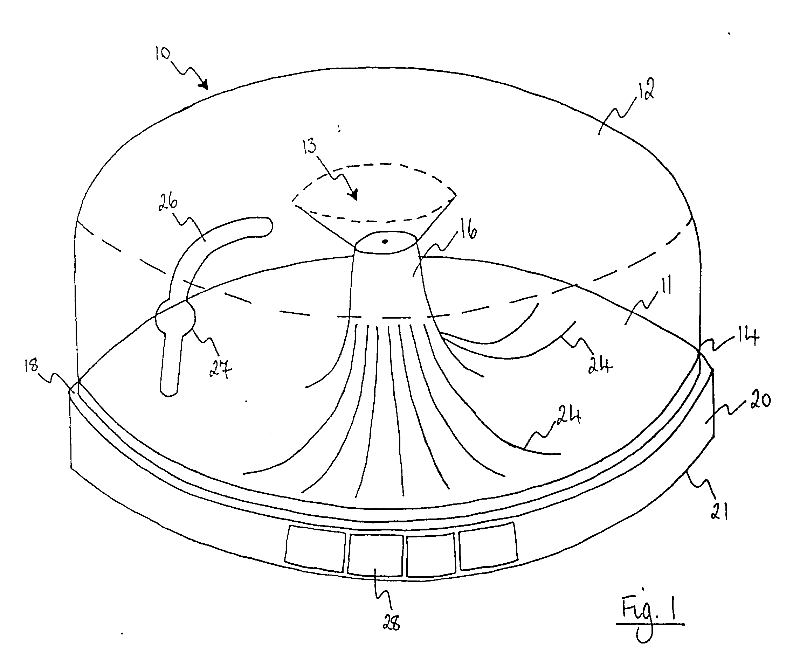

Figure 1 shows a perspective view of a presently preferred embodiment of the invention for use in storing and displaying audio CDs. The storage container 10 therein is made from lightweight but durable moulded thermoplastic, for example polypropylene, to facilitate transport of the storage device.

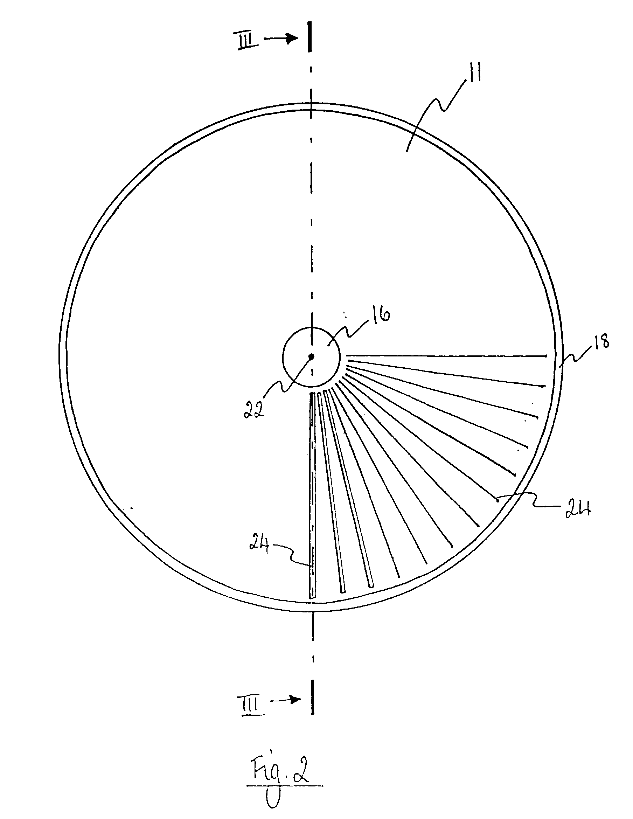

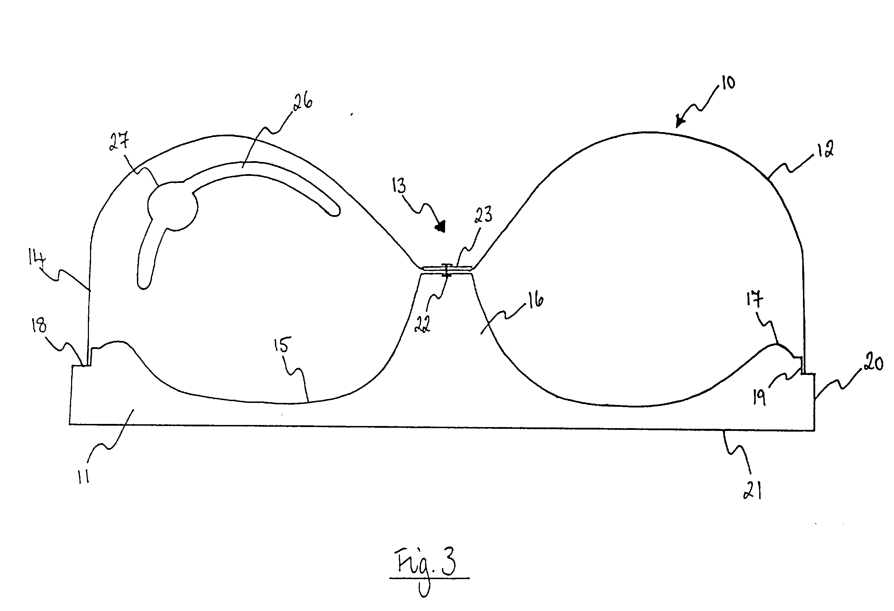

The container has a circular base 11, shown in detail in Figure 2, topped by a circular cover 12 of similar diameter which defines a storage volume within, between the cover 12 and the base 11, as shown in Figure 3. The cover 12 extends from the base 11 over the contents to form a lid. The base 11 is of opaque plastics and the cover 12 is of transparent plastics, enabling inspection of the contents of the container through the cover 12. The cover 12 and the base 11 are of rigid plastics, to the extent that both are self-supporting.

The cover 12 is part-toroidal, having a doughnut-shaped upper surface defining a central hollow 13 and an outer portion that depends to form an annular skirt 14. The skirt 14 terminates in a circular bottom edge.

The base 11 has an upper surface shaped substantially to complete the toroid that is partially defined by the cover 12. To this end, the base 11 defines an annular concavity 15 between an upstanding central boss 16 and a peripheral annular ridge or rim 17. The boss 16 stands higher than the rim 17, so that the concavity 15 faces generally upwardly and outwardly.

The cover 12 can be pivoted about its central axis with respect to the base 11, and the base 11 is provided with means to support and guide the cover 12 during this movement.

The means on the base 11 to support and guide movement of the cover 12 comprises an annular bearing co-operable with the skirt 14 of the cover 12. The bearing comprises a shoulder or shelf 18 around the periphery of the base 11 which supports the bottom edge of the cover in slidable relation.

The shoulder 18 is delimited at its inner edge by a small upstanding wall 19 defining the outer edge of the annular rim 17 which the cover 12 overlaps in a close sliding fit. The wall thus prevents the cover 12 wobbling about its pivot axis.

The shoulder 18 is delimited at its outer edge by a support skirt 20 that depends from the shoulder 18. The support skirt 20 terminates in a circular base edge which lies in a plane to define a planar base surface 21. This base surface rests in use upon a typical horizontal support such as a table or shelf (not shown).

The cover 12 is also supported at and around its pivot axis by the projecting boss 16 upstanding centrally from the base 11. The cover 12 is fixed to the base 11 by a pivot member, in this instance a rivet 22, in the middle of the boss 16. The rivet 22 allows the cover 12 to be pivoted with respect to the base 11 while remaining attached thereto. Additional support is provided by a flat upper bearing surface of the boss 16 which corresponds to and slidingly supports a flat central support surface defined by the base of the central hollow 13 of the cover 12. A washer plate 23 fitted in the central hollow 13 of the cover 12 spreads loads borne by the rivet 22.

A plurality of grooves 24 (in this case thirty in number) are equi-angularly spaced around the central boss 16, extending radially across the annular concavity 15 from the central boss 16 to the annular rim 17. Each groove 24 is generally straight in plan, lying in a plane perpendicular to the base surface, but each groove 24 is also curved longitudinally within that plane and so is of C-shape when viewed in side section. The grooves 24 face upwardly and outwardly, like the concavity 15 in which they are situated.

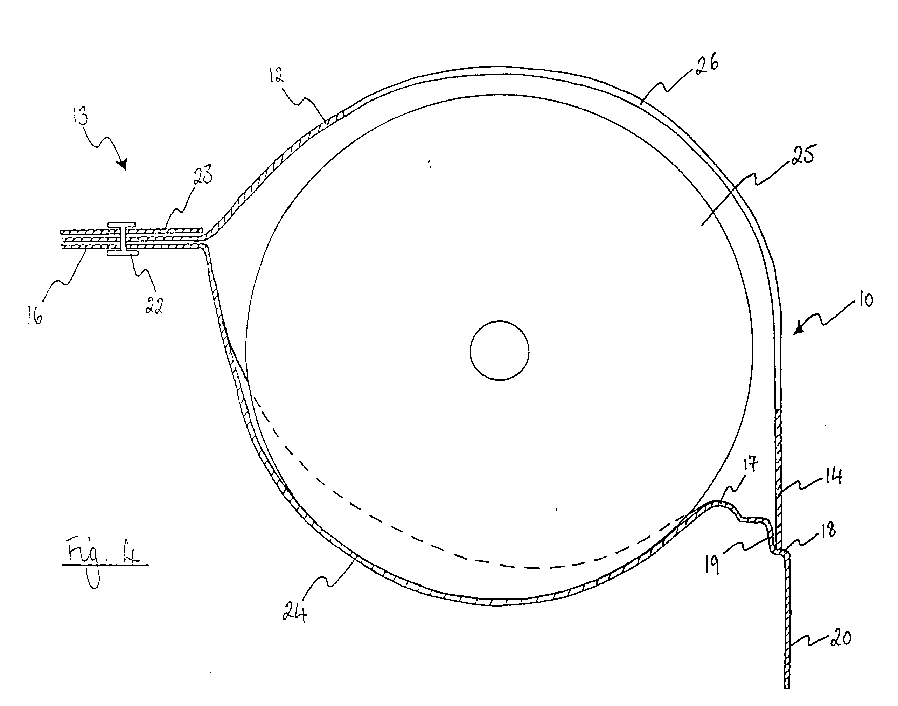

Referring to Figure 4, the curvature of the upper edge of each groove 24 matches the cross-sectional curvature of the concavity 15 whereas the radius of curvature of the base of each groove 24 is smaller, being complementary to the radius of curvature of the discs 25 that the container 10 is adapted to carry. Each groove 24 has a U-shaped cross-section.

The overall radius and hence the overall diameter of the base 11 is determined by the diameter of the discs 25 being supported. A standard CD has a diameter of approximately 120 mm and the radius of the base 11 is larger than this diameter, say about 170 mm. This radius accommodates the central boss 16 while ensuring that the cover 12 stays clear of the edge of the discs 25. However, the cover 12 clearance is kept to a minimum, preferably less than the maximum depth of a groove 24. This ensures that the discs 25 held in the grooves 24 are restrained by the cover 12 against falling out of the grooves 24 should the container 10 be tilted or even inverted.

As best shown in Figure 3, an opening or aperture 26 in the cover 12 provides access to the contents of the container 10, thereby enabling removal and insertion of the discs 25 from and into the container 10 when the cover 12 is turned about the pivot axis to align the aperture 26 with a desired groove 24.

The aperture 26 is a slot lying in a plane perpendicular to the base 11 surface, i.e. in substantially vertical alignment when the base 11 surface is oriented for use. The slot 27 has a central enlargement 27 to accommodate a user's fingers so that a disc 25 can be grasped when removing, or the fingers can be inserted when replacing, the disc 25. The length of the slot 26 is slightly greater than the diameter of a disc 25 and so is sufficient to allow a disc 25 to pass through the slot 26.

The slot 26 is positioned on the cover 12 to face generally upwardly and outwardly when the container 10 is oriented for use. This matches the orientation of the grooves 24 and so enables easy removal of a disc 25 from the container 10, and facilitates insertion of the disc 25 into the container 10 after use by allowing the disc 25 to be simply dropped into position in a vacant groove 24 when the slot 26 is aligned with that groove 24. This simple and intuitive action is in contrast to the fiddly alignment with two slots that is necessary in the prior art described before. The position of the slot 26 also helps to retain the discs 25 in the container 10 so that the discs 25 cannot readily fall out of the container through the slot 26 even if the container 10 is tilted to some extent.

A groove 24 and the concavity 15, boss 16 and rim 17 associated with it act together to support a portion of the periphery of a disc 25. At its outer end, the groove 24 extends to the rim 17 which prevents the discs 25 from rolling off the base 11. The other end of the groove 24 extends part way up the central boss 16, which affords further support of the disc 25. The arrangement also acts as a guide when replacing discs 25 in the container 10, rather than dropping the disc 25 into a groove 24 at the bottom of the inner face of the base 11. Once a disc 25 has been located in its groove 24 against the central boss 16, the curvature of the moulding leads the disc 25 into a secure seated position at the bottom of the curve.

The radial disposition of the discs 25 around the central boss 16 strikes an ideal compromise between maximising the number of discs 25 stored in the container 10 and enabling easy viewing of indicia that may be borne by non-recorded faces of the discs 25. However, further indexing means may be provided; in the preferred embodiment, indexing indicia 28 in the form of names, pictures or numeral are disposed around the support skirt 20 of the base 11 in positions aligned with the grooves 24. In this way, each groove 24 has readily-visible and specific indicia 28 which acts as a guide to the content of the disc 25 intended to be received in the groove 24.

It will be noted by those skilled in the art that the major parts of the container 10, namely the cover 12 and the base 11, are nestable to form a compact stack of identical covers 12 or bases 11. This minimises transport and storage costs, enabling final assembly of the container 10 to take place close to or at the point of sale.

The package of the present invention stores and displays its contents in a protective, lightweight and attractive manner, and is simple and cost-effective to manufacture. The contents are supported in a way that allows easy access and visibility, while minimising the volume of the package.

Many variations are possible within the inventive concept. For example, other methods of supporting the discs such as clips or moveable cradles, despite their disadvantages may be used in place of grooves. Although the preferred embodiment has been described to support and display a specific number of CDs, this does not preclude the storage and display of any number of CDs above and below the number specified. Also, whilst the preferred embodiment has been described with reference to the support and display of optical discs and in particular CDs, the present invention does not preclude use with other disc-shaped or otherwise flat information carriers such as mini-discs or floppy disks.

The present invention may be embodied in other specific forms without departing from the spirit or essential attributes thereof. Accordingly, reference should be made to the appended claims and other general statements herein rather than to the foregoing specification as indicating the scope of the invention.

## Claims

1. A container for storing and/or displaying a plurality of flat information carriers, the container comprising:
a base having a plurality of holders adapted to hold the information carriers in an orientation upstanding from the base;
a rigid cover opposed to the base and to the holders and positioned to prevent release from the holders of information carriers situated between the cover and the base;
means for relative movement between the cover and the base; and
an aperture in the cover that can be aligned with a selected holder by said relative movement to permit insertion or removal of an information carrier into or from the container.

2. The container of Claim 1, wherein each holder is adapted to receive an edge portion of an information carrier upon inserting the information carrier into the holder to a predetermined depth, and wherein the cover is arranged such that at least a part of the cover opposed to the holder is spaced from the inserted information carrier by a spacing less than said depth.

3. The container of Claim 1 or Claim 2, wherein the aperture is a slot aligned with said orientation of the information carriers.

4. The container of Claim 3, wherein the slot includes an enlarged portion permitting access by a user's fingers to grip an information carrier held within the device.

5. The container of any preceding claim, wherein each holder is a groove in the base facing the cover, the groove lying in a plane.

6. The container of Claim 5, wherein at least a portion of the groove is curved within said plane, in longitudinal section along the groove.

7. The container of Claim 6, wherein the curvature of the groove defines end portions of the groove raised from the base relative to an intermediate portion of the groove.

8. The container of any of Claims 5 to 7, wherein the grooves are oriented such that an information carrier is held in a groove under its own weight when the container is oriented for use.

9. The container of Claim 8, wherein the grooves face generally upwardly when the container is oriented for use.

10. The container of any preceding claim, wherein the holders are angularly spaced about a central portion of the base.

11. The container of Claim 10, wherein the information carriers are discs and the holders are disposed to hold the discs in a toric array with each disc being a cross-section of one side of the torus.

12. The container of Claim 11, wherein the holders traverse an annular part-toroidal recess in the base.

13. The container of any of Claims 9 to 12, wherein the cover and the base are connected for relative pivotal movement about the central portion of the base.

14. The container of Claim 13, wherein the cover and the base are connected by a pivot member at the central portion of the base.

15. The container of Claim 14, wherein a bearing is associated with the pivot member.

16. The container of any of Claims 13 to 15, wherein the cover and the base are connected by an annular bearing.

17. The container of Claim 16, wherein the annular bearing comprises a shoulder and a wall, the cover having a skirt that embraces the wall and runs on the shoulder.

18. The container of any preceding claim and having a plurality of indicia on the base, each holder being associated with a specific one of said indicia.

19. The container of any preceding claim and having a plurality of information carriers held by the holders.

20. The container of any preceding claim, wherein the information carriers are optical discs.

21. The container of Claim 20, wherein the optical discs are CDs or CD-ROMs.

22. The container of any preceding claim, wherein a plurality of bases or covers are nestable.
